# EUROPEAN PATENT SPECIFICATION

(11) **EP 2 957 860 B1**
(45) Date of publication and mention of the grant of the patent: **16.10.2019**
(21) Application number: 14779737.7
(22) Date of filing: 13.03.2014
(51) Int. Cl.: G01B 11/24, G01B 11/25

(54) **SHAPE MEASURING DEVICE**
FORMMESSVORRICHTUNG
DISPOSITIF DE MESURE DE FORME

(30) Priority: 01.04.2013 JP 2013076190; 13.11.2013 JP 2013234580
(43) Date of publication of application: 23.12.2015
(73) Proprietor: Kabushiki Kaisha Kobe Seiko Sho (Kobe Steel, Ltd.), Kobe-shi, Hyogo 651-8585 (JP)
(72) Inventor: TAKAHASHI, Eiji, Hyogo 651-2271 (JP); KATAYAMA, Ryo, Hyogo 651-2271 (JP); MANABE, Chitaka, Hyogo 651-2271 (JP); SAKODA, Naokazu, Hyogo 651-2271 (JP)
(74) Representative: Müller-Boré & Partner Patentanwälte PartG mbB
(86) International application number: PCT/JP2014/001453
(87) International publication number: WO 2014/162666

(56) References cited:
- JP-A- H1 068 607
- JP-A- 2002 366 930
- JP-A- 2009 042 114
- JP-A- 2011 104 648
- US-A1- 2009 045 326

## Description

### Technical Field

The present invention relates to a shape measuring device which measures the three-dimensional shape of a measurement object.

### Background Art

An optical cutting line is irradiated onto a bar steel while moving, an image of the bar steel onto which the optical cutting line has been irradiated is captured by an imaging device, the three-dimensional shape of the surface of the bar steel is measured, and the manufactured bar steel is evaluated in the rolling line. In this evaluation, each time images of the bar steel are captured continuously by the imaging device, the three-dimensional shape of the bar steel at the captured location is calculated in real time.

For instance, it is necessary to display, in the form of a graph, the three-dimensional shape data for each bar of the bar steel, and to carry out a quality evaluation inspection directly after measurement.

Patent Literature 1 discloses technology wherein a plurality of light emitters which emit slit light are disposed about the periphery of the measurement object, and the arrangement positions of adjacent light emitters are disposed in such a manner that slit light from adjacent light emitters does not overlap on the surface of the measurement object.

Patent Literature 2 discloses technology wherein a parallel light beam which spreads in a radial direction is irradiated onto an irregular-shaped bar steel, an irregular-shaped bar steel silhouette image in which light is shielded by the irregular-shaped bar steel is captured, and changes in the axial-direction diameter of the irregular-shaped bar steel are detected from the obtained silhouette image.

However, Patent Literature 1 is an invention pertaining to the arrangement of light emitters, and makes absolutely no mention of the real-time processing of the three-dimensional shape of the measurement object. Furthermore, Patent Literature 2 indicates that a characteristic amount (evaluation value) such as the outer shape and/or edge height, etc., is calculated from a silhouette image of irregular-shaped bar steel, and that change in the diameter of the irregular-shaped bar steel in the axial direction is processed in real time, but makes no mention at all of the real-time processing of the measurement results of the measurement object.

### Citation List

### Patent Literature

Patent Literature 1: Japanese Unexamined Patent Publication No. 2001-255125
Patent Literature 2: Japanese Unexamined Patent Publication No. H5-187825

JP 2009 042114 A discloses an apparatus and a method for extracting light-sectioning line.

US 2009/045326 A1 discloses a 3D measurement sensor. In a matrix of light detectors forming a part of a three-dimensional measurement sensor, outputs of light detectors belonging to a same row are connected to a common signal line.

JP 2002 366930 A discloses an image measuring camera. A light source projects line pattern light for measurement to the object to be measured. A photodetector array detects line pattern light reflected from the object to be measured.

### Summary of Invention

The object of the present invention provides a shape measuring device capable of calculating, in real time, the three-dimensional shape of a measurement object.

The shape measuring device according to one aspect of the present invention is a shape measuring device measuring a three-dimensional shape of a measurement object, including: an irradiation unit which irradiates an optical cutting line onto the measurement object which is conveyed in a prescribed conveyance direction, the optical cutting line being irradiated in a direction that intersects with the conveyance direction; an imaging unit which acquires original image data by capturing an image of the measurement object onto which the optical cutting line has been irradiated; a position detection unit which detects the position of the optical cutting line, each time original image data of one horizontal line intersecting with the optical cutting line is input from the imaging unit; an image synthesis unit which generates one-dimensional sequence data, in which the positions of the optical cutting line in each horizontal line detected by the position detection unit are arranged one-dimensionally, and generates synthesized image data by embedding the one-dimensional sequence data in the original image data; a transmission unit which transmits the synthesized image data generated by the image synthesis unit; and a shape calculation unit which receives the synthesized image data and calculates three-dimensional shape data of the measurement object on the basis of the one-dimensional sequence data embedded in the original image data.

### Brief Description of Drawings

Fig. 1 is a schematic drawing of a bar steel rolling line which manufactures bar steel;
Fig. 2 shows a schematic view of the configuration of the shape measuring device according to the first embodiment of the present invention;
Fig. 3 is a block diagram showing the detailed configuration of the imaging unit and the processing device shown in Fig. 2;
Fig. 4 is a schematic drawing showing one example of original image data that is captured by the imaging section;
Fig. 5 is a schematic drawing showing original image data in which the one-dimensional sequence data is embedded;
Fig. 6 is a schematic drawing showing one example of original image data that is captured by the imaging section in the second embodiment of the present invention;
Fig. 7 shows, in section A, one example of color original image data, in section B, the red image component included in the original image data, and in section C, the green image component included in the original image data;
Fig. 8 is a flowchart showing processing in the shape measuring device according to a first embodiment of the present invention;
Fig. 9 is a diagram showing one example of the configuration of the shape measuring device 10 according to a sixth embodiment of the present invention; and
Fig. 10 shows, in section A, one example of color original image data, in section B, the red image component included in the original image data, in section C, the green image component included in the original image data, and in section D, a blue image component included in the original image data.

### Description of Embodiments

### (First embodiment)

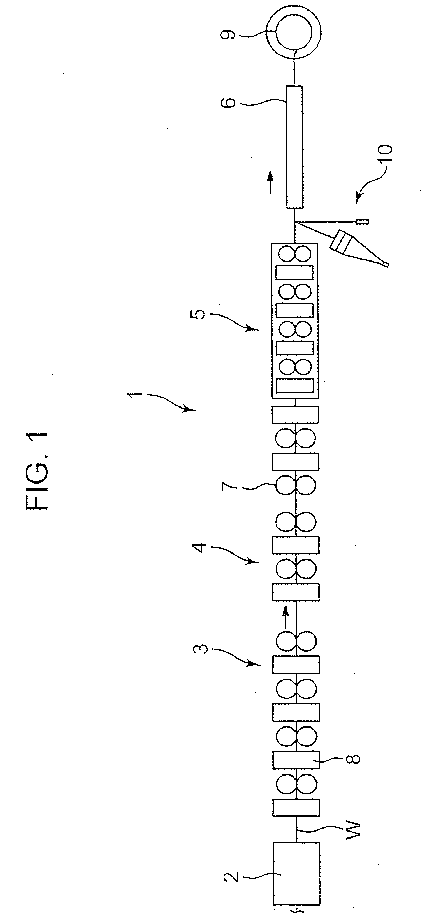

Fig. 1 is a schematic drawing of a bar steel rolling line 1 which manufactures bar steel. As shown in Fig. 1, the bar steel rolling line 1 manufactures bar steel W. The bar steel W manufactured by the bar steel rolling line 1 may be a bar material or strip material.

In the bar steel rolling line 1, a heating furnace 2 which heats steel piece such as billet, a rough rolling device 3, an intermediate stage rolling device 4, a final rolling device 5, and a cooling device 6 (cooling band) are arranged in sequence from the upstream side towards the downstream side.

The rough rolling device 3, intermediate stage rolling device 4 and final rolling device 5 are provided respectively with a plurality of rolling stands 8, and a rolling roll 7 for rolling the bar steel W is provided on each of the rolling stands 8.

In the bar steel rolling line 1, firstly, a billet which is the origin of the bar steel is introduced into a heating furnace 2 and heated, and the heated billet is descaled. The descaled steel billet is rough rolled to a prescribed size by a rough rolling device 3. The rolling roll 7 of the rough rolling device 3 is an H/V arrangement, wherein the pressurizing direction is altered in a perpendicular fashion during rolling. In the intermediate stage rolling device 4 and/or the final rolling device 5, rolling is carried out to achieve a round bar having an elliptical cross-sectional shape, by the respective rolling rolls 7, and finally, the steel is rolled to a target shape (for example, a round shape). The bar steel W which has been rolled to a round shape is cooled in a cooling device 6, and is wound up by a winding device 9, if the steel is a strip material, and is cut to a prescribed length by a dividing shear (not illustrated) if the steel is a bar material.

In addition to this, a shape measuring device 10 is provided in the bar steel rolling line 1 according to the present invention, in order to detect the shape of the bar steel W during rolling, and the cross-sectional width dimensions (also called the stock width). The shape measuring device 10 is provided on the exit side of the final rolling device 5, for example, but the arrangement position thereof is not limited.

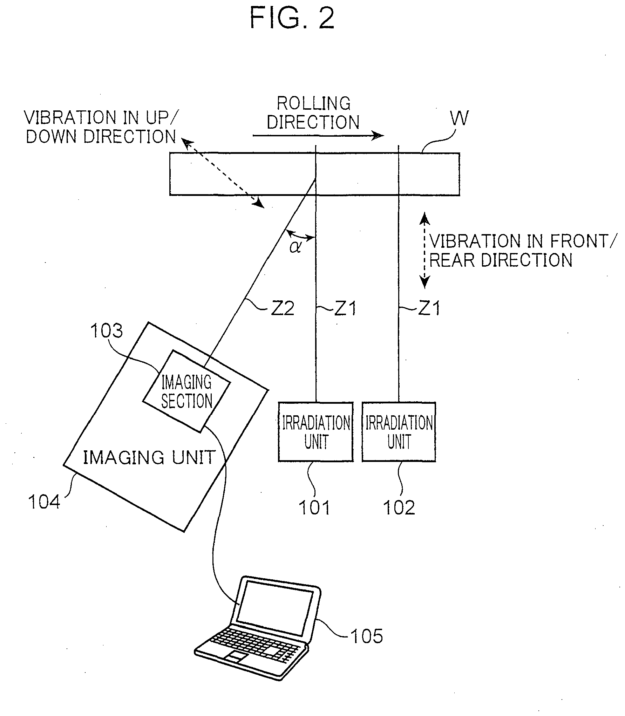

Fig. 2 shows a schematic view of the configuration of the shape measuring device 10 according to the first embodiment of the present invention. The shape measuring device 10 is provided with two irradiation units 101, 102, an imaging unit 104, and the processing device 105. The irradiation unit 101 irradiates an optical cutting line in the width direction of the bar steel W (a substantially perpendicular direction to the direction of movement), onto the surface of the bar steel W (one example of a measurement object) which is conveyed in the rolling direction. The irradiation unit 102 is provided to the downstream side of the irradiation unit 101 in the rolling direction, and similarly to the irradiation unit 101, irradiates an optical cutting line onto the bar steel W.

The irradiation units 101, 102 are provided with a laser light source and a cylindrical lens, and the like. The laser light source irradiates spot-shaped laser light. The cylindrical lens expands the spot light irradiated by the laser light source, into sheet-shaped laser light, and directs same onto the bar steel W.

The optical cutting line has a width that is substantially the same as the width of the bar steel W. With regard to the wavelength of the laser light, for example, laser light in the green waveband of approximately 532 nm wavelength is employed. This is one example, and laser light in the blue waveband may be employed.

The imaging unit 104 is provided with an imaging section 103. The imaging section 103 captures an image of the surface of the bar steel W onto which the optical cutting line has been irradiated. The imaging section 103 is, for example, configured by a camera, such as a CCD or CMOS, etc. and captures images of the bar steel W at a prescribed frame rate.

The irradiation units 101, 102 and the imaging section 103 are disposed in such a manner that the angle between the light axis Z1 of the irradiation units 101, 102, and the light axis Z2 of the imaging section 103 is α. Thereby, the optical cutting line irradiated onto the bar steel W is bent in accordance with the shape of the bar steel W, and the three-dimensional shape data of the bar steel W can be calculated.

A telecentric lens, for example, is used as the imaging lens which is installed in the imaging section 103. Consequently, it is possible to capture an image of the object, without variation in the size of the bar steel W, even if the bar steel W moves to some extent forwards and backwards or lifts up to some extent upwards and downwards.

The processing device 105 is configured by a personal computer, for example, and takes in the original image data captured by the imaging section 103 and calculates the three-dimensional shape of the bar steel W.

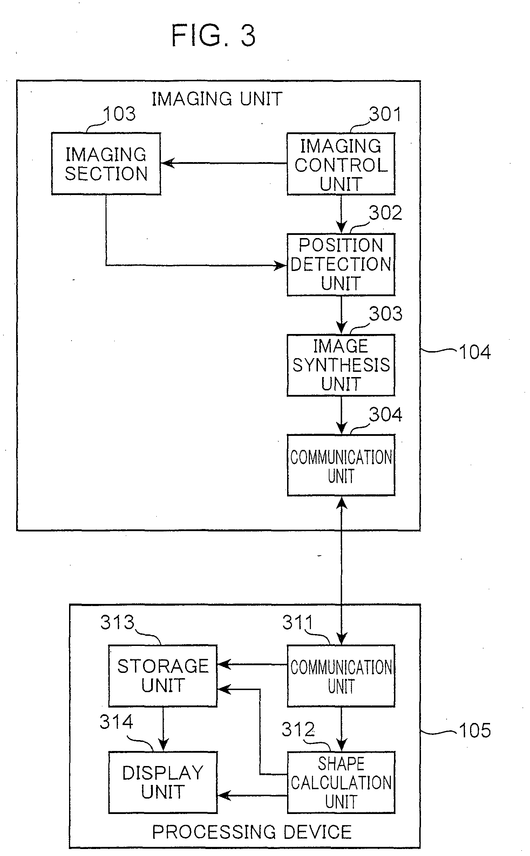

Fig. 3 is a block diagram showing the detailed configuration of the imaging unit 104 and the processing device 105 shown in Fig. 2. The imaging unit 104 is provided with an imaging section 103, an imaging control unit 301, a position detection unit 302, an image synthesis unit 303, and a communication unit 304. In the following description, only the irradiation unit 101 is lit up, and the irradiation unit 102 is extinguished. Therefore, one optical cutting line is irradiated onto the bar steel W.

The imaging section 103 captures an image of the bar steel W, at a prescribed frame rate, and outputs the obtained original image data to the position detection unit 302. Here, the imaging section 103 is provided with a monochromatic imaging element, for example, and acquires monochromatic original image data. Furthermore, upon capturing the original image data of one image, the imaging section 103 outputs the original image data to the position detection unit 302, in units of one pixel, by raster scanning from the pixel at the top left corner to the pixel at the bottom right corner, for instance.

The imaging control unit 301 sends a control signal to the imaging section 103, and causes the imaging section 103 to carry out an imaging operation. The control signal includes, for example, a signal for the imaging section 103 to capture images of the bar steel W at the prescribed frame rate.

Each time the original image data of one horizontal line which intersects with the optical cutting line is input from the imaging section 103, the position detection unit 302 detects the position of the optical cutting line.

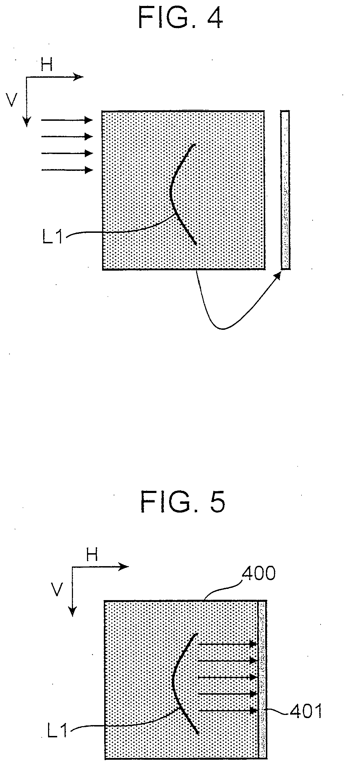

Fig. 4 is a schematic drawing showing one example of original image data that is captured by the imaging section 103. The original image data includes the optical cutting line L1, as shown in Fig. 4. The optical cutting line L1 has a shape which bends in accordance with the surface shape of the bar steel W. The original image data is, for example, two-dimensional image data which has a point of origin set at the left-top corner, a V axis set in the vertical direction, and an H axis set in the horizontal direction, and in which the position of each pixel is specified by an H coordinate and a V coordinate.

In the example in Fig. 4, the position detection unit 302 acquires the original image data of one horizontal line, so as to firstly acquire the original image data of the horizontal line V=0, and then acquire the original image data of the horizontal line V=1. The one horizontal line means the image data of one line in the horizontal direction of the original image data.

Here, the position detection unit 302 carries out, in parallel fashion, processing for acquiring the original image data of one horizontal line V=i (where i is an index for identifying the horizontal line), and processing for detecting the position of the optical cutting line from the original image data of one horizontal line V=i-1 that has already been acquired. Therefore, the position detection unit 302 is able to complete the processing for detecting the position of the optical cutting line in each horizontal line of the original image data, at substantially the same time as completing the acquisition of the original image data of one image.

Here, the position detection unit 302 detects the position of the brightness peak in each of the horizontal lines constituting the original image data, and takes that position to be the position of the optical cutting line L1. More specifically, the position detection unit 302 detects the position of the brightness peak in each of the horizontal lines constituting the original image data, so as to detect the position of the brightness peak in the horizontal line V=0, in the original image data, and then detect the position of the brightness peak in the horizontal line V=1.

Here, the position detection unit 302 may detect the position of the brightness peak at the pixel level, or at the sub-pixel level.

Returning to Fig. 3, the image synthesis unit 303 generates one-dimensional sequence data in which the positions of the optical cutting line L1 in each of the horizontal lines as detected by the position detection unit 302 are arranged in a one-dimensional sequence, and embeds this one-dimensional sequence data in the original image data to generate synthesized image data.

For example, the position detection unit 302 respectively detects H=a(0), a(1), a(2), ..., as the positions of the brightness peak in each of the horizontal lines V=0, 1, 2, .... In this case, the image synthesis unit 303 generates one-dimensional sequence data by arranging the data group a(0), a(1), a(2), ... in sequence along the V axis direction.

The image synthesis unit 303 embeds the one-dimensional sequence data in one line at the end of the original image data, to generate synthesized image data. In the original image data, there is a region where the optical cutting line L1 is not present. In this region, the position detection unit 302 does not detect the position of the optical cutting line. More specifically, the position detection unit 302 determines that the optical cutting line L1 is not displayed in the horizontal line in question if the brightness in that line is not higher than a threshold value. In this case, the image synthesis unit 303 may set a value of 0 for the one-dimensional sequence data of the horizontal line in which the optical cutting line L1 has not been detected by the position detection unit 302.

Fig. 5 is a schematic drawing showing original image data 400 in which the one-dimensional sequence data is embedded. In the example in Fig. 5, the one-dimensional sequence data which indicates the position of the optical cutting line L1 is embedded in one line at the right end 401 of the original image data 400. Here, the one line at the right end 401 means one line parallel to the vertical direction, having the maximum coordinate in the horizontal direction. In this way, the one-dimensional sequence data is embedded in the original image data by being irradiated to one line at the right end 401.

More specifically, if the pixel positions of one line at the right end 401 is P(Hn,0), P(Hn,1), P(Hn,2), ..., then the values a(0), a(1), a(2), ... which constitute the one-dimensional sequence data are stored respectively for P(Hn,0), P(Hn,1), P(Hn,2), .... Here, Hn indicates the right-end coordinate in the horizontal direction, in the original image data 400.

In the example in Fig. 5, one-dimensional sequence data is embedded in one line at the right end 401, but the present invention is not limited to this, and the one-dimensional sequence data may be embedded in one line at the left end 402, one line at the top end, or one line at the bottom end. In other words, the one-dimensional sequence data can be embedded at a prescribed position where it is evident that the optical cutting line L1 is not depicted, in the original image data.

In a conventional shape measuring device, the imaging unit 104 has not carried out processing for acquiring the original image data and processing for detecting the position of the optical cutting line L1, in parallel. Therefore, as shown in Fig. 4, the imaging unit 104 sends the original image data captured by the imaging section 103, directly to the processing device 105, and the processing device 105 undertakes the processing for detecting the position of the optical cutting line L1.

As a result of this, a conventional shape measuring device has not been able to start processing for detecting the position of the optical cutting line L1, until after the transmission of original image data from the imaging unit 104 to the processing device 105 has been completed. Therefore, in a conventional shape measuring device 10, it has been difficult to calculate the three-dimensional shape data of the bar steel W in real time.

In the present embodiment, the imaging unit 104 carries out processing for acquiring the original image data of one image and processing for detecting the position of the optical cutting line L1, in parallel fashion. Therefore, the processing device 105 is not required to carry out processing for detecting the position of the optical cutting line L1 in respect of the original image data that is sent from the imaging unit 104. Consequently, the shape measuring device 10 is able to calculate the three-dimensional shape data of the bar steel W in real time.

Furthermore, since synthesized image data in which one-dimensional sequence data is embedded in the original image data is sent in real time, then it is possible to display, in real time, the calculation results of the three-dimensional shape data, while providing a live display, in real time, of the original image data.

Returning to Fig. 3, the communication unit 304 is configured, for example, by a communication circuit which complies with the communications standards GigE and/or CameraLink. The communication unit 304 sends the synthesized image data produced by the image synthesis unit 303, to the processing device 105. Here, the communication unit 304 sends the synthesized image data to the processing device 105, at a communication rate substantially equal to the frame rate of the imaging section 103.

The processing device 105 is provided with a communication unit 311, a shape calculation unit 312, a storage unit 313 and a display unit 314. The communication unit 311 receives the original image data sent from the imaging unit 104.

The shape calculation unit 312 uses the one-dimensional sequence data embedded in the original image data received by the communication unit 311, to calculate three-dimensional shape data of the bar steel W based on the principles of trigonometry. Here, when the original image data of one image is acquired, the shape calculation unit 312 calculates the three-dimensional shape for one line from the one-dimensional sequence data embedded in the acquired original image data of the one image, within the time taken to acquire the original image data of the next image. Consequently, the shape calculation unit 312 is able to calculate the three-dimensional shape data of the bar steel W in real time.

The storage unit 313, for example, is configured by a non-volatile storage device such as a hard disk, EEPROM, or the like, and stores three-dimensional shape data calculated by the shape calculation unit 312. Furthermore, the storage unit 313 stores the original image data received by the communication unit 311.

The display unit 314 is configured by a liquid-crystal display monitor, for example, and displays three-dimensional shape data calculated by the shape calculation unit 312, or displays original image data stored in the storage unit 313. Here, the display unit 314 displays the calculation result, each time the three-dimensional shape data of one line is calculated by the shape calculation unit 312. Thereby, the user is able to confirm, in real time, the calculation results of the three-dimensional shape data. Furthermore, the display unit 314 displays the synthesized image data, each time the communication unit 311 receives synthesized image data. Therefore, the measurement result of the bar steel W is displayed on the display unit 314 in real time.

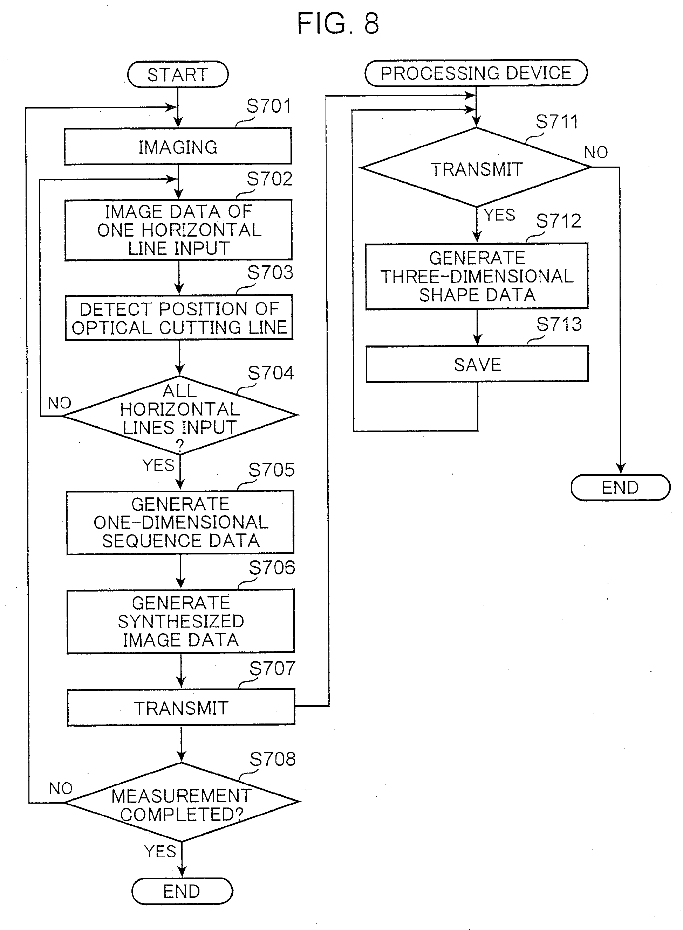

Fig. 8 is a flowchart showing processing in the shape measuring device 10 according to a first embodiment of the present invention. Firstly, the imaging section 1 03 acquires original image data of one image, by capturing an image of the bar steel W which is in a state of travel while an optical cutting line L1 is irradiated thereon (S701). The imaging section 103 then outputs the acquired original image data, one pixel at a time, to the position detection unit 302.

Next, the position detection unit 302, upon receiving input of original image data of one horizontal line (S702), detects the position of the optical cutting line L1 included in that horizontal line (S703). If the input of all of the horizontal lines in the original image data of one image has not been completed (NO at S704), then the position detection unit 302 returns processing to S702, and detects the position of the optical cutting line L1 in respect of the horizontal line which is input subsequently. On the other hand, if the input of the original image data of all horizontal lines constituting the original image data of one image has been completed (YES at S704), then the position detection unit 302 advances processing to S705.

In S705, the image synthesis unit 303 generates one-dimensional sequence data by arranging the positions of the optical cutting line detected by the position detection unit 302, sequentially in the vertical direction (S705).

Thereupon, as shown in Fig. 5, the image synthesis unit 303 embeds the one-dimensional sequence data in one line at the right end 401 of the original image data, to generate synthesized image data (S706). Next, the communication unit 304 sends the synthesized image data to the processing device 105 (S707).

Next, when a measurement completion instruction is input by a user (YES at S708), the processing is terminated. On the other hand, when a measurement completion instruction is not input by the user (NO at S708), then the processing returns to S701, original image data of the next time is acquired by the imaging section 103, and the processing from S702 on is continued.

In S711, when the communication unit 311 receives the original image data of one image (YES at S711), then the shape calculation unit 312 calculates the three-dimensional shape data of one line, from the one-dimensional sequence data embedded in the received original image data (S712), and stores this data in the storage unit 313 (S713). The processing then returns to S711.

On the other hand, when measurement has been completed and the communication unit 311 has not been able to receive the original image data (NO at S711), then the processing terminates. Here, the communication unit 311 should issue a NO verdict at S711, if the time from acquiring the original image data of one image until acquiring the next original image data exceeds a specific value.

### (Second embodiment)

The shape measuring device 10 according to the second embodiment is characterized in that two optical cutting lines are irradiated onto the bar steel W. Parts of the present embodiment which are the same as the first embodiment are not described here.

In the present embodiment, as shown in Fig. 2, the irradiation unit 102 also irradiates an optical cutting line on the bar steel W, in addition to the irradiation unit 101. Below, the optical cutting line irradiated by the irradiation unit 101 is called L1 and the optical cutting line irradiated by the irradiation unit 102 is called L2. The imaging section 103 simultaneously captures images of the optical cutting lines L1 and L2. Consequently, two optical cutting lines L1, L2 are included in the original image data of one image. In order to achieve this, the spacing between the irradiation unit 101 and the irradiation unit 102 in the rolling direction is set to a spacing whereby the two optical cutting lines L1, L2 are contained within the angle of view of the imaging section 103.

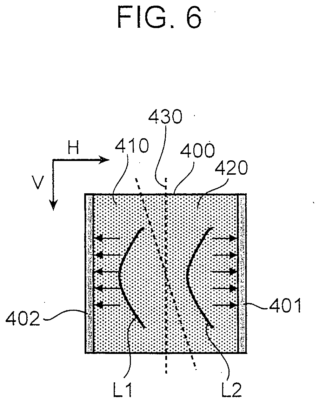

Fig. 6 is a schematic drawing showing one example of original image data that is captured by the imaging section 103 in the second embodiment of the present invention. Consequently, two optical cutting lines L1, L2 are included in the original image data of one image, as shown in Fig. 6.

In the present embodiment, the position detection unit 302 detects two positions of the optical cutting line in each of the horizontal lines. More specifically, as shown in Fig. 6, the original image data 400 is previously divided into two regions 410, 420, by a center line 430 in the horizontal direction. The region 410 is a region corresponding to the optical cutting line L1, and the region 420 is a region corresponding to the optical cutting line L2.

In each of the regions 410, 420, a point of origin is set in the top left corner. Furthermore, the spacing between the irradiation units 101, 102 is set in such a manner that, in each of the regions 410, 420, provided that the shape of the bar steel W is the same, the optical cutting lines L1, L2 are depicted at the same coordinate in the horizontal direction. In other words, the spacing between the irradiation units 101, 102 is set in such a manner that, when the optical cutting lines L1, L2 are irradiated onto two locations on bar steel W having the same shape, the differential in the horizontal direction between the optical cutting line L1 and the optical cutting line L2 is zero.

The image synthesis unit 303 generates one-dimensional sequence data indicating the position of the optical cutting line L1 and one-dimensional sequence data indicating the position of the optical cutting line L2. Here, the image synthesis unit 303 may generate two sets of one-dimensional sequence data, taking the optical cutting line depicted in region 410 to be the optical cutting line L1 and taking the optical cutting line depicted in region 420 to be the optical cutting line L2.

The image synthesis unit 303 generates synthesized image data by embedding the one-dimensional sequence data of the optical cutting line L1 in one line at the left end 402 of the original image data 400 and embedding the one-dimensional sequence data of the optical cutting line L2 in one line at the right end 401 of the original image data.

The processing thereafter is the same as the first embodiment, and therefore description thereof is omitted here. In this way, according to the second embodiment, the sets of one-dimensional sequence data corresponding respectively to the two optical cutting lines are generated and embedded in the original image data. Therefore, it is possible to send the one-dimensional sequence data in real time, even when using two optical cutting lines.

In the description given above, two optical cutting lines were irradiated, but the present invention is not limited to this, and it is also possible to irradiate three or more optical cutting lines. In this case, the sets of one-dimensional sequence data corresponding respectively to the three optical cutting lines may be embedded in the original image data in a region where the optical cutting lines are not represented. The image synthesis unit 303 may embed the three sets of one-dimensional sequence data, for example, in lines at the left end, the right end and the top end of the original image data. By adopting this configuration, it is possible to generate synthesized image data without losing the information about the optical cutting lines appearing in the original image data.

Furthermore, when four optical cutting lines are irradiated and four sets of one-dimensional sequence data are generated, these four sets of one-dimensional sequence data may be embedded respectively in the left end, the right end, the top end and the bottom end of the original image data. Moreover, when five or more optical cutting lines are irradiated, the one-dimensional sequence data may be embedded cyclically in the original image data, in such a manner that a set of one-dimensional sequence data corresponding to a fifth optical cutting line is embedded in an adjacent line to the inside of the line where the first set of one-dimensional sequence data is embedded, and a set of one-dimensional sequence data corresponding to a sixth optical cutting line is embedded in an adjacent line to the inside of the line where the second set of one-dimensional sequence data is embedded.

### (Third embodiment)

The shape measuring device 10 according to the third embodiment is characterized in that the effects of vibration of the bar steel W in the front/rear direction, on the optical cutting lines, are eliminated. As shown in Fig. 2, the bar steel W may vibrate in the front/rear direction. Here, the front/rear direction is a direction parallel to the light axis Z1.

In the present embodiment, similarly to the second embodiment, two optical cutting lines L1, L2 are irradiated onto the bar steel W. Furthermore, as shown in Fig. 6, similarly to the second embodiment, the position detection unit 302 detects the positions of the optical cutting lines L1, L2 in the respective coordinate systems of the regions 410, 420.

When the bar steel W vibrates in the front/rear direction, then the optical cutting lines L1, L2 each move parallel to the horizontal direction, by the same amount. Therefore, when the differential between the optical cutting lines L1, L2 is derived, a value (essentially zero) in which the vibration of the bar steel W in the front/rear direction has been eliminated is obtained. On the other hand, when the shape represented by the optical cutting line L1 and the shape represented by the optical cutting line L2 are different, then a value other than 0 is output when the differential between the optical cutting lines L1, L2 is derived.

Consequently, in the present embodiment, the image synthesis unit 303 derives the differential between the optical cutting line L1 and the optical cutting line L2, and generates one-dimensional sequence data which represents the differential result, and embeds this data in the original image data. For example, the positions of the optical cutting line L1 at V=0, 1, 2, ... are represented by a1(0), a1(1), a1(2), ..., and the positions of the optical cutting line L2 at V=0, 1, 2, ... are represented by a2(0), a2(1), a2(2), .... In this case, the image synthesis unit 303 determines a data group including, for example, Δa(0) = a1(0)-a2(0), Δa(1) = a1(1)-a2(1), Δa(2) = a1(2)-a2(2), ..., and generates this data group as the one-dimensional sequence data.

The data group including Δa(0), Δa(1), Δa(2), ... only includes information about the relative shape of the optical cutting lines L1, L2, and does not include information indicating the shape of the bar steel W itself. Thereupon, the image synthesis unit 303 generates, as the one-dimensional sequence data, a data group including a3(0) = a1(0)+Δa(0), a1(1)+Δa(1), a1(2)+Δa(2), ....

In this way, by deriving the differential between the optical cutting lines L1, L2, it is possible to generate one-dimensional sequence data in which the effects of vibration of the bar steel W in the front/rear direction have been eliminated. Therefore, the shape calculation unit 312 can accurately determine the three-dimensional shape data of the bar steel W, even if the bar steel W vibrates in the front/rear direction.

### (Fourth embodiment)

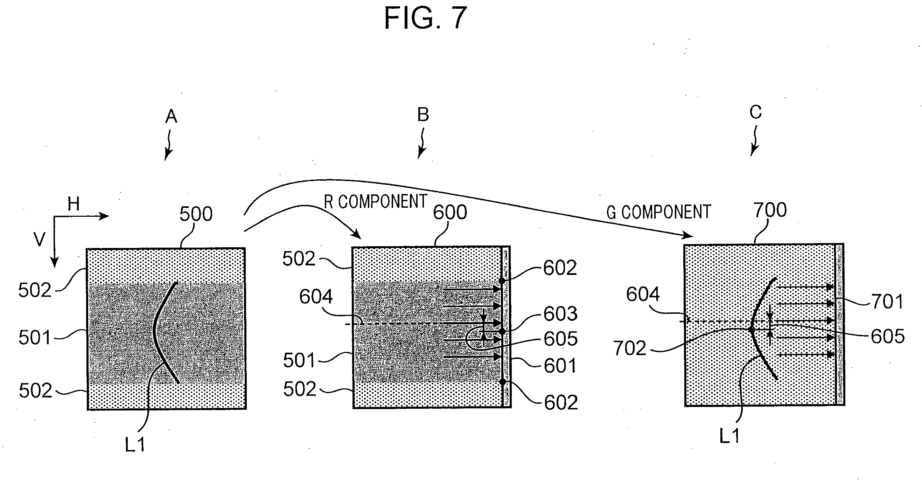

The shape measuring device 10 according to the fourth embodiment is characterized in that the effects of vibration of the bar steel W in the up/down direction are eliminated. As shown in Fig. 2, the bar steel W may vibrate in the up/down direction. Here, the up/down direction indicates vibration in the rolling direction of the bar steel W. When the bar steel W vibrates in the up/down direction, the optical cutting line L1 is displaced in the perpendicular direction, as shown by the section A in Fig. 7. Therefore, in order to eliminate deviation in this perpendicular direction, in the present embodiment, an imaging section 103 provided with a color imaging element is employed. Here, the color imaging element employs an element in which pixels provided with R, G and B color filters are disposed in a Bayer arrangement, for example. In the present embodiment, red is one example of a first color and G is one example of a second color.

Furthermore, the irradiation units 101, 102 irradiate green laser light, similarly to the first embodiment. Furthermore, the bar steel W is taken to be undergoing a rolling step and to be spontaneously emitting red light. In the description given below, it is supposed that only the irradiation unit 101 is irradiating light, and that the irradiation unit 102 is extinguished.

In the present embodiment, the red image component of the original image data (the image component of a first color) is used in order to detect the width of the bar steel W, and the green image component of the original image data (the image component of a second color) is used in order to calculate the three-dimensional shape data of the bar steel W.

Section A in Fig. 7 shows one example of color original image data 500, section B shows the red image component 600 included in the original image data 500, and section C shows the green image component 700 included in the original image data 500. When the green optical cutting line is irradiated onto the bar steel W which is spontaneously emitting red light, then when an image is captured by the imaging section 103, original image data 500 which includes a red region 501 indicating the bar steel W, and a background region 502, is obtained. Furthermore, a green optical cutting line L1 is depicted in the region 501.

Consequently, a band-shaped region 501 which indicates the presence of the bar steel W, in red, is included in the red image component 600. On the other hand, the green image component 700 includes the green optical cutting line L1.

Therefore, the width of the bar steel W is detected from the red image component 600, and the three-dimensional shape data of the bar steel W can be determined from the green image component 700.

However, in a conventional shape measuring device, the original image data 500 was sent directly to the processing device 105, and therefore the detection of the width of the bar steel W was carried out in the processing device 105, and hence real-time processing was difficult to achieve.

Therefore, in the present embodiment, detection of the width of the bar steel W is carried out in the imaging unit 104. More specifically, the position detection unit 302 calculates a representative value of the brightness of the horizontal line in question, each time the original image data of a horizontal line constituting the red image component 600 is input from the imaging section 103. Furthermore, the position detection unit 302 detects the position of the optical cutting line L1, each time the original image data of one horizontal line constituting the green image component 700 is input. Here, the representative value of the brightness may use the integral value and/or the average value of the brightness in one horizontal line.

Here, the position detection unit 302 carries out processing for acquiring a red image component of one horizontal line at V=i, and processing for calculating a representative value of the brightness of the red image component of one horizontal line that has been acquired V = i-1, in parallel.

Simultaneously, the position detection unit 302 carries out processing for acquiring a green image component of one horizontal line at V=i, and processing for detecting the position of the optical cutting line L1 from the green image component of one horizontal line that has been acquired V = i-1, in parallel. Therefore, the processing for calculating a representative value of the brightness and the processing for detecting the position of the optical cutting line L1 in each horizontal line of the original image data, can be completed at substantially the same time as completing the acquisition of the original image data of one image.

The image synthesis unit 303 generates red one-dimensional sequence data by arranging the representative values of the brightness calculated for each of the horizontal lines, in a sequence in the vertical direction, and as shown by section B in Fig. 7, the one-dimensional sequence data is embedded into one line at the right end 601 of the red image component 600, to generate a synthesized red image component.

Furthermore, the image synthesis unit 303 generates green one-dimensional sequence data by arranging the positions of the optical cutting line L1 calculated for each of the horizontal lines, in a sequence in the vertical direction, and as shown by section C in Fig. 7, the one-dimensional sequence data is embedded into one line at the right end 701 of the green image component 700, to generate a synthesized green image component.

The communication unit 304 sends original image data including the synthesized red image component, the synthesized green image component and the blue image component, to the processing device 105.

As shown in section B in Fig. 7, the shape calculation unit 312 detects the ends 602 of the bar steel W from the red one-dimensional sequence data included in the synthesized red image component, and determines a central position 603 in the width direction (perpendicular direction) of the bar steel W, from the ends 602. Here, the shape calculation unit 312, for example, differentiates the representative values of the brightness included in the red one-dimensional sequence data, and determines the positions where the differential value is greater than a prescribed threshold value, to be the ends 602.

The shape calculation unit 312 determines the differential in the vertical direction between the central position 603, and the center line 604 of the vertical direction of the synthesized red image component (original image data 500), as an offset 605.

Furthermore, the shape calculation unit 312 adds the offset 605 to the green one-dimensional sequence data included in the synthesized green image component, in other words, the data indicating the position of the optical cutting line L1, and thereby shifts the green one-dimensional sequence data in the vertical direction in such a manner that the center position 702 of the optical cutting line L1 is situated on the center line 604.

The shape calculation unit 312 then calculates the three-dimensional shape data of one line of the bar steel W, from the green one-dimensional sequence data which has been shifted in the vertical direction, using the principles of trigonometry.

In this way, according to the present embodiment, since the optical cutting line L1 is corrected in such a manner that the center position 702 of the optical cutting line L1 is situated on the center line 604 of the green image component (original image data 500), then it is possible to prevent the effects caused by vibration of the bar steel W in the up/down direction from being represented in the measurement results.

Furthermore, the imaging unit 104 completes the processing for calculating a representative value of the brightness and the processing for detecting the position of the optical cutting line L1 in each horizontal line of the original image data, at substantially the same time as completing the acquisition of the original image data of one image. Therefore, the processing device 105 can calculate, in real time, three-dimensional shape data in which the effects of vibration of the bar steel W in the up/down direction is eliminated.

In the description given above, the position of the optical cutting line L1 is detected by using a green image component, but the present invention is not limited to this and the position of the optical cutting line L1 may also be detected by using a blue image component. In this case, the image synthesis unit 303 may embed one-dimensional sequence data indicating the position of the optical cutting line L1, in one line on the right end of the blue image component.

In the present embodiment, only the optical cutting line L1 is used, but when using the optical cutting line L2 also, it is also possible to eliminate the effects due to vibration in the up/down direction, from the optical cutting line, similarly to the third embodiment. More specifically, the image synthesis unit 303 determines the differential between the optical cutting line L1 and the optical cutting line L2 which is represented in the green image component, generates one-dimensional sequence data from this differential, using the method of the third embodiment, and embeds this data in an end of the green image component. This modification can also be applied to the fifth embodiment.

### (Fifth embodiment)

The fifth embodiment is characterized in that, in the fourth embodiment, the processing for eliminating the effects of vibration of the bar steel W in the up/down direction, from the optical cutting line L1, is carried out in the imaging unit 104. In the present embodiment, the processing up to the determination of the representative values of brightness for each horizontal line, from the red image component 600, and the position of the optical cutting line L1, from the green image component 700, is the same as the fourth embodiment.

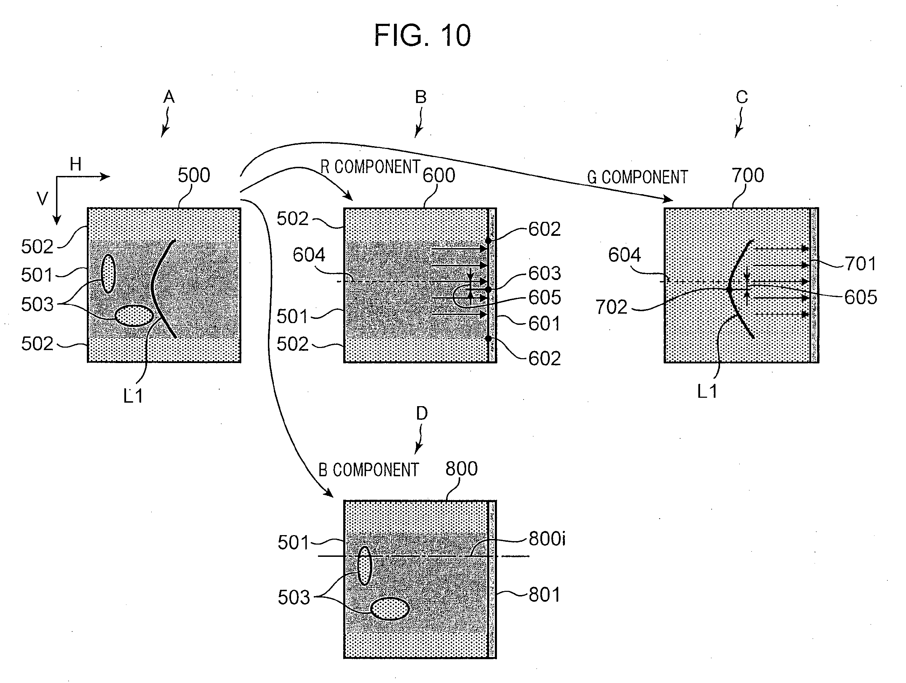

In the present embodiment, as indicated in section B of Fig. 10, the image synthesis unit 303 detects the ends 602 of the bar steel W from the representative values of the brightness calculated for each of the horizontal lines, and determines a central position 603 in the width direction (perpendicular direction) of the bar steel W, from the ends 602. Here, the image synthesis unit 303, for example, differentiates the representative values of the brightness of each horizontal line, and determines the positions where the differential value is greater than a prescribed threshold value, to be the ends 602.

The image synthesis unit 303 then determines the differential in the vertical direction between the central position 603, and the center line 604 of the vertical direction of the original image data 500, as an offset 605.

Furthermore, the image synthesis unit 303 adds the offset 605 to the data indicating the position of the optical cutting line L1 detected from the green image component 700, as shown in section C of Fig. 7, and thereby shifts the optical cutting line L1 in the vertical direction in such a manner that the center position 702 of the optical cutting line L1 is situated on the center line 604.

The image synthesis unit 303 generates one-dimensional sequence data from the optical cutting line L1 which has been shifted by the offset 605 in the vertical direction, embeds this data in the green image component 700, and sends synthesized image data including the red, green and blue image components, to the processing device 105.

On the other hand, the shape calculation unit 312 calculates the three-dimensional shape data of one line of the bar steel W, from the data indicating the position of the optical cutting line L1 contained in the one-dimensional sequence data included in the synthesized image data, using the principles of trigonometry.

In this way, in the present embodiment, the processing for making the center position 702 of the optical cutting line L1 coincide with the center line 604 of the original image data 500 is performed by the imaging unit 104. Consequently, the processing device 105 is able to calculate the three-dimensional shape data of the bar steel W more rapidly.

In the description given above, the position of the optical cutting line L1 is detected by using the green image component 700, but the present invention is not limited to this and the position of the optical cutting line L1 may also be detected by using the blue image component.

### (Sixth embodiment)

The shape measuring device 10 according to the sixth embodiment is characterized in that, in the shape measuring device 10 of the fourth embodiment, blue light (light of a third color) is also irradiated onto the bar steel W, and defects in the bar steel W are detected by using the blue image component (third-color image component) included in the original image data.

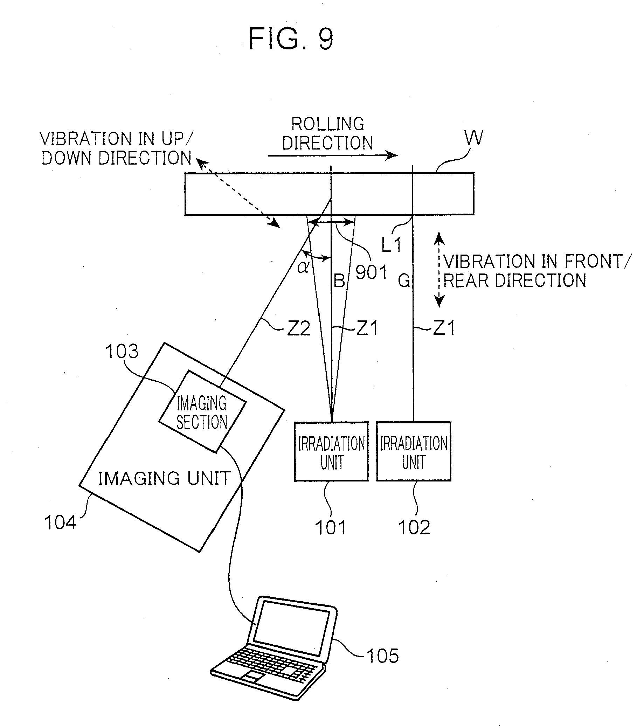

Fig. 9 is a diagram showing one example of the configuration of the shape measuring device 10 according to a sixth embodiment of the present invention. The irradiation units 101, 102 are arranged in alignment in the rolling direction. In Fig. 2, the irradiation units 101, 102 both irradiate optical cutting lines, but in Fig. 9, the irradiation unit 101 irradiates blue spot light, and the irradiation unit 102 irradiates a green optical cutting line. Here, the irradiation region 901 of the blue spot light on the bar steel W is at least greater than the size of the bar steel W in the width direction.

The imaging section 103 simultaneously captures images of the irradiation region 901 of blue spot light and the optical cutting line L1. Consequently, image data of a single image in which a light image of the irradiation region 901 and a light image of the optical cutting line L1 are aligned in the rolling direction is obtained. In order to achieve this, the irradiation units 101, 102 are arranged in such a manner that the irradiation region 901 and the optical cutting line L1 are contained within the angle of view of the imaging section 103.

In the present embodiment, the irradiation unit 101 is, for example, configured by a laser light source which outputs blue laser light, and an optical system which expands the blue laser light output from the laser light source, to the size of the irradiation region 901, and guides the light onto the bar steel W. However, this is one example, and it is also possible to use a light source other than a laser light source, such as an LED, as the light source of the irradiation unit 101, instead of the laser light source. The details of the configuration of the irradiation unit 102 are the same as the irradiation unit 102 shown in Fig. 2. The irradiation units 101, 102 are arranged in such a manner that the light axis Z1 is perpendicular to the rolling direction.

Furthermore, the irradiation unit 101 is disposed in such a manner that the angle between the optical axis Z1 and the optical axis Z2 of the imaging section 103 is α. Thereby, blue spot light is irradiated onto the bar steel W in a direction that intersects with the light axis Z2 of the imaging section 103. As a result of this, the imaging section 103 is able to accurately capture defects included in the bar steel W.

Section A in Fig. 10 shows one example of color original image data 500, section B shows the red image component 600 included in the original image data 500, section C shows the green image component 700 included in the original image data 500, and section D shows a blue image component 800 included in the original image data 500. In the present embodiment, the blue spot light is irradiated onto the bar steel W, which spontaneously emits red light, in addition to the optical cutting line which is green. Therefore, original image data 500 which includes a red region 501 indicating the bar steel W and a background region 502 is obtained. Furthermore, a defect region 503 formed of pixels which indicate a blue defect is depicted, in addition to the green optical cutting line L1, in the region 501.

Therefore, in the present embodiment, the position detection unit 302 calculates a representative value of the brightness of the horizontal line in question, each time the original image data of a horizontal line constituting the red image component 600 is input from the imaging section 103.

Furthermore, the position detection unit 302 detects the position of the optical cutting line L1, each time the original image data of one horizontal line constituting the green image component 700 is input.

Moreover, in the present embodiment, the position detection unit 302 extracts the pixels indicating a defect, in the horizontal line in question, each time the original image data of one horizontal line constituting a blue image component 800 is input, and counts the number of pixels thus extracted.

Here, the position detection unit 302 determines, with respect to pixels included in one horizontal line constituting a blue image component 800, whether or not the brightness value is in a normal range that is equal to or greater than a first threshold value and equal to or less than a second threshold value (which is greater than the first threshold value), and if the brightness value is in the normal range, then the corresponding pixel is determined to be a pixel indicating a defect, whereas if the brightness value is outside the normal range, then the corresponding pixel is determined not to be a pixel indicating a defect. Here, a lower limit value which is envisaged as a brightness value of a normal pixel representing a portion other than a defect is used as the first threshold value, and an upper limit value which is envisaged as a brightness value of a normal pixel is used as the second threshold value.

For example, in the one horizontal line 800i where V=i indicated in section D of Fig. 10, when the number of pixels situated inside the defect region 503 is taken to be five, then the position detection unit 302 counts the number of pixels indicating the defect at the horizontal line 800i to be five.

Here, the position detection unit 302 carries out processing for acquiring a red image component of one horizontal line at V=i, and processing for calculating a representative value of the brightness of the red image component of one horizontal line that has been acquired V = i-1, in parallel.

Simultaneously, the position detection unit 302 carries out processing for acquiring a green image component of one horizontal line at V=i, and processing for detecting the position of the optical cutting line L1 from the green image component of one horizontal line that has been acquired V = i-1, in parallel.

Simultaneously, the position detection unit 302 carries out processing for acquiring a blue image component of one horizontal line at V=i, and processing for counting the pixels indicating a defect from the blue image component of one horizontal line that has been acquired V = i-1, in parallel.

Therefore, the processing for calculating a representative value of the brightness and the processing for detecting the position of the optical cutting line L1 in each horizontal light of the original image data, and the processing for counting the pixels indicating a defect in each horizontal line of the original image data, can be completed at substantially the same time as completing the acquisition of the original image data of one image.

Similarly to the fourth embodiment, the image synthesis unit 303 generates red one-dimensional sequence data and as shown by section B in Fig. 10, the one-dimensional sequence data is embedded into one line at the right end 601 of the red image component 600, to generate a synthesized red image component.

Furthermore, similarly to the fourth embodiment, the image synthesis unit 303 generates green one-dimensional sequence data by arranging the positions of the optical cutting line L1 calculated for each of the horizontal lines, in a sequence in the vertical direction, and as shown by section C in Fig. 10, the one-dimensional sequence data is embedded into one line at the right end 701 of the green image component 700, to generate a synthesized green image component.

Moreover, in the present embodiment, the image synthesis unit 303 generates blue one-dimensional sequence data by arranging the count values of the pixels indicating a defect, which have been calculated for each of the horizontal lines, in a sequence in the vertical direction, and as shown by section D in Fig. 10, the one-dimensional sequence data is embedded into one line at the right end 801 of the blue image component 800, to generate a synthesized blue image component.

The communication unit 304 sends original image data including the synthesized red image component, the synthesized green image component and the synthesized blue image component, to the processing device 105.

The shape calculation unit 312, similarly to the fourth embodiment, detects the ends 602 of the bar steel W from the red one-dimensional sequence data indicated in section B of Fig. 10, and determines the central position 603 of the bar steel W in the width direction. The shape calculation unit 312 determines the differential in the vertical direction between the central position 603, and the center line 604 of the vertical direction of the synthesized red image component, as an offset 605.

Furthermore, similarly to the fourth embodiment, the shape calculation unit 312 adds the offset 605 to the green one-dimensional sequence data included in the synthesized green image component, and thereby shifts the green one-dimensional sequence data in the vertical direction in such a manner that the center position 702 of the optical cutting line L1 is situated on the center line 604. The shape calculation unit 312 calculates three-dimensional shape data of one line, from the green one-dimensional sequence data which has been shifted in the vertical direction, and saves this data in the storage unit 313, as well as displaying the data on the display unit 314.

Furthermore, the shape calculation unit 312 calculates the area of the defect region 503 from the count value included in the blue one-dimensional sequence data contained in the synthesized blue image component. Here, the shape calculation unit 312 may determine that a defect region 503 of one grouping is present at the location where a count value of one or more is present continuously in the blue one-dimensional sequence data, and may calculate the area separately from the defect region 503. Alternatively, the shape calculation unit 312 may calculate the sum total of the count value included in one set of blue one-dimensional sequence data, as the area of the defect region 503. In this case, even if there is a plurality of defect regions 503, the surface area of one defect region 503 is obtained in respect of one synthesized blue image component, without distinguishing between the defect regions 503. The shape calculation unit 312 saves the area of the defect region 503 in the storage unit 313, as well as displaying the area on the display unit 314. Accordingly, each time the processing device 105 acquires the original image data of one image, the area of the defect region 503 is displayed on the display unit 314, and the user is able to recognize, in real time, the size of the area of the defect contained in the bar steel W.

Here, the shape calculation unit 312 may notify the operator that a large defect is present in the bar steel W, by issuing an alarm, or the like, on the display unit 314, when the area of the defect region 503 is greater than a specific value. Consequently, the operator immediately halts the manufacture of the bar steel W, and can prevent, in advance, the manufacture of a large quantity of defective product.

In the present embodiment, there is no need to identify the position of the indicated defect in the bar steel W, but rather it is sufficient to know the extent of the defect that is included in the bar steel W. Therefore, the sum total of the count value included in the blue one-dimensional sequence data is calculated as the area of the defect region 503.

In this way, in the sixth embodiment, since blue light is irradiated onto the bar steel W, then it is possible to detect the size of the defect included in the bar steel W, from the blue image component included in the original image data.

In the sixth embodiment, blue light was used as the spot light that is irradiated onto the bar steel W, but this is one example, and green light may also be used. In this case, blue optical cutting lines may be irradiated onto the bar steel W.

Furthermore, in the sixth embodiment, blue light was used as the spot light irradiated onto the bar steel W, and green light was used for the optical cutting lines to be irradiated onto the bar steel W, but this is one example, and any colors may be employed, provided that the colors are different from the red color of the light emitted spontaneously by the bar steel W. In this case, an imaging section 103 should be employed which has sensitivity to the color of the spot light irradiated onto the bar steel W, and the color of the optical cutting lines irradiated onto the bar steel W, in addition to red light.

### (Summary of present embodiments)

The shape measuring device according to the present embodiments is a shape measuring device measuring a three-dimensional shape of a measurement object, comprising: an irradiation unit which irradiates an optical cutting line onto the measurement object which is conveyed in a prescribed conveyance direction, the optical cutting line being irradiated in a direction that intersects with the conveyance direction; an imaging unit which acquires original image data by capturing an image of the measurement object onto which the optical cutting line has been irradiated; a position detection unit which detects the position of the optical cutting line, each time the original image data of one horizontal line intersecting with the optical cutting line is input from the imaging unit; an image synthesis unit which generates one-dimensional sequence data, in which the position of the optical cutting line in each horizontal line detected by the position detection unit are arranged one-dimensionally, and generates synthesized image data by embedding the one-dimensional sequence data in the original image data; a transmission unit which transmits the synthesized image data generated by the image synthesis unit; and a shape calculation unit which receives the synthesized image data and calculates three-dimensional shape data of the measurement object on the basis of the one-dimensional sequence data embedded in the original image data.

According to this configuration, the position detection unit detects the position of the optical cutting line, each time the original image data of one horizontal line is input from the imaging unit. Therefore, the position detection unit is able to complete the processing for detecting the position of the optical cutting line in each horizontal line of the original image data, at substantially the same time as completing the acquisition of the original image data of one image.

Furthermore, the shape calculation unit is not required to carry out processing for detecting the position of the optical cutting line in respect of the original image data that is sent from the transmission unit. Consequently, the shape measuring device is able to calculate the three-dimensional shape data of the measurement object in real time.

Furthermore, since synthesized image data in which one-dimensional sequence data is embedded in the original image data is sent in real time, then it is possible to display, in real time, the calculation results of the three-dimensional shape data, while providing a live display, in real time, of the original image data.

Furthermore, in the configuration described above, the position detection unit may detect the position of the brightness peak of each horizontal line as the position of the optical cutting line.

According to this configuration, it is possible to determine the position of the optical cutting line accurately.

Furthermore, in the configuration described above, the image synthesis unit may embed the one-dimensional sequence data in one line at the end of the original image data.

According to this configuration, it is possible to embed the one-dimensional sequence data in the original image data, without impairing the information about the optical cutting line which is contained in the original image data.

Furthermore, in the configuration described above, the irradiation unit may irradiate a plurality of the optical cutting lines onto the measurement object; and the image synthesis unit may calculate the one-dimensional sequence data corresponding to the optical cutting lines simultaneously from a plurality of regions within the original image data that are preset in accordance with each optical cutting line and embed the one-dimensional sequence data items in one line at the end of the preset original image data.

According to this configuration, even in cases where a plurality of sets of one-dimensional sequence data are generated, it is possible to embed the plurality of sets of one-dimensional sequence data in the original image data, without impairing the information about the optical cutting line which is contained in the original image data.

Furthermore, in the configuration described above, the irradiation unit may irradiate two optical cutting lines, and the image synthesis unit may calculate a difference between the positions of two optical cutting lines and calculate the one-dimensional sequence data on the basis of said difference.

By deriving the differential between two optical cutting lines, it is possible to generate one-dimensional sequence data in which the effects of vibration of the measurement object in the front/rear direction have been eliminated. Consequently, even if the measurement object vibrates in the front/rear direction, it is possible accurately to determine the three-dimensional shape data of the measurement object.

Furthermore, in the configuration described above, the measurement object may be an object which is in a hot state and which spontaneously emits light of a first color; the irradiation unit may irradiate the optical cutting line with a second color that is different from the first color; the imaging unit may be configured by color imaging elements respectively having sensitivity to the first and second colors; and the position detection unit and the image synthesis unit may carry out processing separately on the first and second image components of the original image data captured by the imaging unit.

According to this configuration, it is possible to determine information about the width of the measurement object from the image component of the first component, and to detect the optical cutting line of the measurement object, from the image component of the second color.

Furthermore, in the configuration described above, the position detection unit may calculate a representative value of the brightness of one horizontal line constituting the image component of the first color, each time the original image data of the one horizontal line is input, and detect the position of the optical cutting line, each time the original image data of one horizontal line constituting the image component of the second color is input; and the image synthesis unit may generate the one-dimensional sequence data on the basis of processing results of both image components.

According to this configuration, it is possible to complete processing for determining the representative value of the brightness in each horizontal line of the image component of the first color, and processing for determining the position of the optical cutting line from each horizontal line of the image component of the second color, at substantially the same time as completing the processing for acquiring original image data.

Furthermore, in the configuration described above, the irradiation unit may further irradiate the measurement object with a third color that is different from the first and second colors, from a direction that intersects with the optical axis of the imaging unit; and the imaging unit may be configured by color imaging elements which respectively have sensitivity to the first to third colors; and the position detection unit may detect the size of a defect on the measurement object from the image component of the third color.

According to this configuration, it is possible to detect a defect on the measurement object from the image component of the third color. Furthermore, since the irradiation unit irradiates the measurement object with a third color from a direction that intersects with the optical axis of the imaging unit, then the imaging unit can also accurately capture images of a defect on the measurement object.

Moreover, in the configuration described above, the position detection unit may count the number of pixels indicating a defect on the measurement object including in one horizontal line constituting the image component of the third color, each time original image data of the one horizontal line is input, and the image synthesis unit may generate the one-dimensional sequence data on the basis of the count value of the pixels indicating the defect.

According to this configuration, it is possible to complete the processing for counting the number of pixels indicating a defect on the measurement object, from each horizontal line of the image component of the third color, at substantially the same time as completing the processing for acquiring the original image data.

Furthermore, in the configuration described above, the image synthesis unit may detect both ends of the measurement object from a representative value of the brightness calculated for each horizontal line of the image component of the first color, determine a central position of the measurement object in the width direction from the both ends, determine , as an offset, a deviation between the central position and a center line of the original image data in the perpendicular direction and correct the one-dimensional sequence data indicating the optical cutting line on the basis of the offset such that the central position of the optical cutting line is situated on the center line.

According to this configuration, the processing for aligning the central position of the optical cutting line with the center line of the original image data is carried out by the image synthesis unit. Consequently, the shape calculation unit is able to calculate the three-dimensional shape data of the measurement object more rapidly.

## Claims

1. A shape measuring device (10) measuring a three-dimensional shape of a measurement object (W), comprising:
an irradiation unit (101, 102) which irradiates an optical cutting line onto the measurement object (W) which is conveyed in a prescribed conveyance direction, the optical cutting line being irradiated in a direction that intersects with the conveyance direction;
an imaging unit (103) which acquires original image data by capturing an image of the measurement object (W) onto which the optical cutting line has been irradiated; and
a position detection unit (302) which detects the position of the optical cutting line, each time the original image data of one horizontal line intersecting with the optical cutting line is input from the imaging unit (103);
**characterized by**
an image synthesis unit (303) which generates one-dimensional sequence data, in which the position of the optical cutting line in each horizontal line detected by the position detection unit (302) are arranged one-dimensionally, and generates synthesized image data by embedding the one-dimensional sequence data in the original image data;
a transmission unit (304) which transmits the synthesized image data generated by the image synthesis unit (303); and
a shape calculation unit (312) which receives the synthesized image data and calculates three-dimensional shape data of the measurement object (W) on the basis of the one-dimensional sequence data embedded in the original image data.

2. The shape measuring device (10) according to claim 1, wherein the position detection unit (302) detects the position of a brightness peak in each horizontal line, as the position of the optical cutting line.

3. The shape measuring device (10) according to claim 1, wherein the image synthesis unit (303) embeds the one-dimensional sequence data in one line at the end of the original image data.

4. The shape measuring device (10) according to claim 1, wherein
the irradiation unit (101, 102) irradiates a plurality of the optical cutting lines onto the measurement object (W); and
the image synthesis unit (303) calculates one-dimensional sequence data items corresponding to the optical cutting lines simultaneously from a plurality of regions within the original image data that are preset in accordance with each optical cutting line, and embeds the one-dimensional sequence data items in one line at the end of the preset original image data.

5. The shape measuring device (10) according to claim 4, wherein
the irradiation unit (101, 102) irradiates two optical cutting lines; and
the image synthesis unit (303) calculates a difference between the positions of the two optical cutting lines, and calculates the one-dimensional sequence data on the basis of the difference.

6. The shape measuring device (10) according to claim 1, wherein
the measurement object (W) is an object which is in a hot state and which spontaneously emits light of a first color;
the irradiation unit (101, 102) irradiates the optical cutting line with a second color that is different from the first color;
the imaging unit (103) is configured by color imaging elements respectively having sensitivity to the first and second colors; and
the position detection unit (302) and the image synthesis unit (303) carry out processing separately on the first and second image components of the original image data captured by the imaging unit (103).

7. The shape measuring device (10) according to claim 6, wherein
the position detection unit (302) calculates a representative value of the brightness of one horizontal line constituting the image component of the first color, each time original image data of the one horizontal line is input, and detects the position of the optical cutting line, each time original image data of one horizontal line constituting the image component of the second color is input; and
the image synthesis unit (303) generates the one-dimensional sequence data on the basis of processing results of both image components.

8. The shape measuring device (10) according to claim 6, wherein
the irradiation unit (101, 102) further irradiates the measurement object (W) with a third color that is different from the first and second colors, from a direction that intersects with the optical axis of the imaging unit (103);
the imaging unit (103) is configured by color imaging elements respectively having sensitivity to the first to third colors; and
the position detection unit (302) detects the size of a defect on the measurement object (W) from the image component of the third color.

9. The shape measuring device (10) according to claim 8, wherein
the position detection unit (302) counts the number of pixels indicating a defect in the measurement object (W) included in one horizontal line constituting the image component of the third color, each time original image data of the one horizontal line is input; and
the image synthesis unit (303) generates the one-dimensional sequence data on the basis of the count value of the pixels indicating the defect.

10. The shape measuring device (10) according to any one of claims 6 to 9, wherein the image synthesis unit (303) detects both ends of the measurement object (W) from a representative value of the brightness calculated for each horizontal line of the image component of the first color, determines a central position of the measurement object (W) in the width direction from the both ends, determines, as an offset, a deviation between the central position and a center line of the original image data in the perpendicular direction and corrects the one-dimensional sequence data indicating the optical cutting line on the basis of the offset such that the central position of the optical cutting line is situated on the center line.

## Patentansprüche

1. Formmessvorrichtung (10) zum Messen einer dreidimensionalen Form eines Messobjekts (W), umfassend:
eine Bestrahlungseinheit (101, 102), die eine optische Schnittlinie auf das Messobjekt (W) strahlt, das in einer vorgeschriebenen Förderrichtung befördert wird, wobei die optische Schnittlinie in einer Richtung aufgestrahlt wird, die sich mit der Förderrichtung schneidet;
eine Abbildungseinheit (103), die Originalbilddaten durch Aufnehmen eines Bilds des Messobjekts (W) erfasst, auf das die optische Schnittlinie gestrahlt wurde; und
eine Positionserfassungseinheit (302), die die Position der optischen Schnittlinie jedes Mal erfasst, wenn die Originalbilddaten einer horizontalen Linie, die sich mit der optischen Schnittlinie schneidet, von der Abbildungseinheit (103) eingegeben werden;
**gekennzeichnet durch**
eine Bildsyntheseeinheit (303), die eindimensionale Sequenzdaten erzeugt, in denen die Position der optischen Schnittlinie in jeder horizontalen Linie, die von der Positionserfassungseinheit (302) erfasst wird, eindimensional angeordnet ist bzw. sind, und die synthetisierte Bilddaten durch Einbetten der eindimensionalen Sequenzdaten in die Originalbilddaten erzeugt;
eine Übertragungseinheit (304), die die von der Bildsyntheseeinheit (303) erzeugten synthetisierten Bilddaten überträgt; und
eine Formberechnungseinheit (312), die die synthetisierten Bilddaten empfängt und dreidimensionale Formdaten des Messobjekts (W) basierend auf den eindimensionalen Sequenzdaten berechnet, die in die Originalbilddaten eingebettet sind.

2. Formmessvorrichtung (10) nach Anspruch 1, wobei die Positionserfassungseinheit (302) die Position einer Helligkeitsspitze in jeder horizontalen Linie als die Position der optischen Schnittlinie erfasst.

3. Formmessvorrichtung (10) nach Anspruch 1, wobei die Bildsyntheseeinheit (303) die eindimensionalen Sequenzdaten in eine Zeile am Ende der Originalbilddaten einbettet.

4. Formmessvorrichtung (10) nach Anspruch 1, wobei
die Bestrahlungseinheit (101, 102) eine Mehrzahl optischer Schnittlinien auf das Messobjekt (W) strahlt; und
die Bildsyntheseeinheit (303) eindimensionale Sequenzdatenelemente, die den optischen Schnittlinien entsprechen, gleichzeitig aus einer Mehrzahl von Bereichen innerhalb der Originalbilddaten berechnet, die gemäß jeder optischen Schnittlinie voreingestellt sind, und die eindimensionalen Sequenzdatenelemente in eine Zeile am Ende der voreingestellten Originalbilddaten einbettet.

5. Formmessvorrichtung (10) nach Anspruch 4, wobei
die Bestrahlungseinheit (101, 102) zwei optische Schnittlinien bestrahlt; und die Bildsyntheseeinheit (303) eine Differenz zwischen den Positionen der beiden optischen Schnittlinien berechnet und die eindimensionalen Sequenzdaten auf der Basis der Differenz berechnet.

6. Formmessvorrichtung (10) nach Anspruch 1, wobei
das Messobjekt (W) ein Objekt ist, das sich in einem heißen Zustand befindet und spontan Licht einer ersten Farbe emittiert;
die Bestrahlungseinheit (101, 102) die optische Schnittlinie mit einer zweiten Farbe bestrahlt, die sich von der ersten Farbe unterscheidet;
die Abbildungseinheit (103) durch Farbabbildungselemente konfiguriert ist, die jeweils eine Empfindlichkeit für die erste und die zweite Farbe aufweisen; und die Positionserfassungseinheit (302) und die Bildsyntheseeinheit (303) eine separate Verarbeitung der ersten und zweiten Bildkomponente der von der Abbildungseinheit (103) erfassten Originalbilddaten durchführen.

7. Formmessvorrichtung (10) nach Anspruch 6, wobei
die Positionserfassungseinheit (302) einen repräsentativen Wert der Helligkeit einer horizontalen Linie berechnet, die die Bildkomponente der ersten Farbe bildet bzw. darstellt, jedes Mal, wenn Originalbilddaten der einen horizontalen Linie eingegeben werden, und die Position der optischen Schnittlinie erfasst, jedes Mal, wenn Originalbilddaten einer horizontalen Linie, die die Bildkomponente der zweiten Farbe bildet bzw. darstellt, eingegeben werden; und
die Bildsyntheseeinheit (303) die eindimensionalen Sequenzdaten auf der Basis der Verarbeitungsergebnisse beider Bildkomponenten erzeugt.

8. Formmessvorrichtung (10) nach Anspruch 6, wobei
die Bestrahlungseinheit (101, 102) ferner das Messobjekt (W) mit einer dritten Farbe, die sich von der ersten und zweiten Farbe unterscheidet, aus einer Richtung bestrahlt, die sich mit der optischen Achse der Abbildungseinheit (103) schneidet;
die Abbildungseinheit (103) durch Farbabbildungselemente konfiguriert ist, die jeweils eine Empfindlichkeit für die erste bis dritte Farbe aufweisen; und
die Positionserfassungseinheit (302) die Größe eines Fehlers auf dem Messobjekt (W) aus der Bildkomponente der dritten Farbe erfasst.

9. Formmessvorrichtung (10) nach Anspruch 8, wobei
die Positionserfassungseinheit (302) die Anzahl von Pixeln zählt, die einen Fehler in dem Messobjekt (W) angeben, das in einer horizontalen Linie enthalten ist, die die Bildkomponente der dritten Farbe bildet bzw. darstellt, jedes Mal, wenn Originalbilddaten der einen horizontalen Linie eingegeben werden; und
die Bildsyntheseeinheit (303) die eindimensionalen Sequenzdaten auf der Basis des Zählwerts der Pixel erzeugt, die den Defekt angeben.

10. Formmessvorrichtung (10) nach einem der Ansprüche 6 bis 9, wobei die Bildsyntheseeinheit (303) beide Enden des Messobjekts (W) aus einem repräsentativen Wert der Helligkeit erfasst, der für jede horizontale Linie der Bildkomponente der ersten Farbe berechnet wird, eine zentrale Position des Messobjekts (W) in der Breitenrichtung von beiden Enden bestimmt, als Versatz eine Abweichung zwischen der zentralen Position und einer Mittellinie der Originalbilddaten in der senkrechte Richtung bestimmt, und die eindimensionalen Sequenzdaten, die die optische Schnittlinie angeben, auf der Basis des Versatzes derart korrigiert, dass sich die zentrale Position der optischen Schnittlinie auf der Mittellinie befindet.

## Revendications

1. Dispositif de mesure de forme (10) mesurant une forme tridimensionnelle d'un objet de mesure (W), comprenant :
un module d'irradiation (101, 102) qui irradie une ligne de coupe optique sur l'objet de mesure (W) qui est transporté dans une direction de transport prescrite, la ligne de coupe optique étant irradiée dans une direction qui coupe la direction de transport ;
un module d'imagerie (103) qui acquiert des données d'image d'origine en capturant une image de l'objet de mesure (W) sur lequel la ligne de coupe optique a été irradiée ; et
un module de détection de position (302) qui détecte la position de la ligne de coupe optique chaque fois que les données d'image d'origine d'une ligne horizontale coupant la ligne de coupe optique sont entrées depuis le module d'imagerie (103) ;
**caractérisé par**
un module de synthèse d'image (303) qui génère des données de séquence unidimensionnelle dans lesquelles la position de la ligne de coupe optique dans chaque ligne horizontale détectée par le module de détection de position (302) est agencée de manière unidimensionnelle, et génère des données d'image synthétisée en incorporant les données de séquence unidimensionnelle dans les données d'image d'origine ;
un module de transmission (304) qui transmet les données d'image synthétisée générées par le module de synthèse d'image (303) ; et
un module de calcul de forme (312) qui reçoit les données d'image synthétisée et calcule des données de forme tridimensionnelle de l'objet de mesure (W) en fonction des données de séquence unidimensionnelle incorporées dans les données d'image d'origine.

2. Dispositif de mesure de forme (10) selon la revendication 1, dans lequel le module de détection de position (302) détecte la position d'un pic de luminosité dans chaque ligne horizontale en tant que la position de la ligne de coupe optique.

3. Dispositif de mesure de forme (10) selon la revendication 1, dans lequel le module de synthèse d'image (303) incorpore les données de séquence unidimensionnelle dans une ligne à la fin des données d'image d'origine.

4. Dispositif de mesure de forme (10) selon la revendication 1, dans lequel
le module d'irradiation (101, 102) irradie une pluralité des lignes de coupe optiques sur l'objet de mesure (W) ; et
le module de synthèse d'image (303) calcule des éléments de données de séquence unidimensionnelle correspondant aux lignes de coupe optiques simultanément à partir d'une pluralité de régions au sein des données d'image d'origine qui sont prédéfinies conformément à chaque ligne de coupe optique, et incorpore les éléments de données de séquence unidimensionnelle dans une ligne à la fin des données d'image d'origine prédéfinies.

5. Dispositif de mesure de forme (10) selon la revendication 4, dans lequel
le module d'irradiation (101, 102) irradie deux lignes de coupe optiques ; et
le module de synthèse d'image (303) calcule une différence entre les positions des deux lignes de coupe optiques et calcule les données de séquence unidimensionnelle en fonction de la différence.

6. Dispositif de mesure de forme (10) selon la revendication 1, dans lequel
l'objet de mesure (W) est un objet qui est dans un état chaud et qui émet spontanément de la lumière d'une première couleur ;
le module d'irradiation (101, 102) irradie la ligne de coupe optique avec une deuxième couleur qui est différente de la première couleur ;
le module d'imagerie (103) est configuré par des éléments d'imagerie couleur ayant respectivement une sensibilité aux première et deuxième couleurs ; et
le module de détection de position (302) et le module de synthèse d'image (303) réalisent un traitement séparément sur les premier et second composants d'image des données d'image d'origine capturés par le module d'imagerie (103).

7. Dispositif de mesure de forme (10) selon la revendication 6, dans lequel
le module de détection de position (302) calcule une valeur représentative de la luminosité d'une ligne horizontale constituant le composant d'image de la première couleur chaque fois que des données d'image d'origine de la ligne horizontale en question sont entrées et détecte la position de la ligne de coupe optique chaque fois que des données d'image d'origine d'une ligne horizontale constituant le composant d'image de la deuxième couleur sont entrées ; et
le module de synthèse d'image (303) génère les données de séquence unidimensionnelle en fonction de résultats de traitement des deux composants d'image.

8. Dispositif de mesure de forme (10) selon la revendication 6, dans lequel
le module d'irradiation (101, 102) irradie en outre l'objet de mesure (W) avec une troisième couleur qui est différente des première et deuxième couleurs depuis une direction qui coupe l'axe optique du module d'imagerie (103) ;
le module d'imagerie (103) est configuré par des éléments d'imagerie couleur ayant respectivement une sensibilité aux première à troisième couleurs ; et
le module de détection de position (302) détecte la taille d'un défaut sur l'objet de mesure (W) à partir du composant d'image de la troisième couleur.

9. Dispositif de mesure de forme (10) selon la revendication 8, dans lequel
le module de détection de position (302) compte le nombre de pixels indiquant un défaut dans l'objet de mesure (W) inclus dans une ligne horizontale constituant le composant d'image de la troisième couleur chaque fois que des données d'image d'origine de la ligne horizontale en question sont entrées ; et
le module de synthèse d'image (303) génère les données de séquence unidimensionnelle en fonction de la valeur de compte des pixels indiquant le défaut.

10. Dispositif de mesure de forme (10) selon l'une quelconque des revendications 6 à 9, dans lequel le module de synthèse d'image (303) détecte les deux extrémités de l'objet de mesure (W) à partir d'une valeur représentative de la luminosité calculée pour chaque ligne horizontale du composant d'image de la première couleur, détermine une position centrale de l'objet de mesure (W) dans le sens de la largeur depuis les deux extrémités, détermine, en tant que décalage, un écart entre la position centrale et une ligne centrale des données d'image d'origine dans la direction perpendiculaire et corrige les données de séquence unidimensionnelle indiquant la ligne de coupe optique en fonction du décalage de sorte que la position centrale de la ligne de coupe optique est située sur la ligne centrale.
